# EUROPÄISCHE PATENTANMELDUNG

(11) **EP 1 306 255 A2**
(43) Veröffentlichungstag der Anmeldung: **02.05.2003**
(21) Anmeldenummer: 02020017.6
(22) Anmeldetag: 06.09.2002
(51) Int. Cl.: B60K 6/04, F16H 41/00, F16H 3/72, F16H 45/00

(54) **Antriebsvorrichtung für ein Fahrzeug, insbesondere dieselelektrische Antriebsordnung mit Wandlergetriebebaueinheit**

(30) Priorität: 24.10.2001 DE 10152488
(71) Anmelder: Voith Turbo GmbH & Co. KG, 89522 Heidenheim (DE)
(72) Erfinder: Müller, Robert, Dr., 89407 Dillingen (DE)
(74) Vertreter: Weitzel, Wolfgang, Dr.-Ing.

(57) **Zusammenfassung**

Die Erfindung betrifft eine Antriebsvorrichtung für ein Fahrzeug, insbesondere ein nicht spurgebundenes Fahrzeug,
mit einer Verbrennungskraftmaschine;
mit einer im Traktionsbetrieb als Generator betreibbaren elektrischen Maschine; mit einem wenigstens mittelbar mit einem Achsantrieb und/oder den anzutreibenden Rädern koppelbaren elektrischen Antriebsmotor.

Die Erfindung ist gekennzeichnet durch die folgenden Merkmale:
zwischen dem elektrischen Antriebsmotor und den anzutreibenden Rädern bzw. dem Achsantrieb ist eine Drehzahl-/Drehmomentenübertragungs- und Wandlungseinrichtung in Form einer Wandlergetriebebaueinheit mit Leistungsverzweigung angeordnet;
die Wandlergetriebebaueinheit umfaßt wenigstens einen hydrodynamischen Drehzahl-/Drehmomentenwandler, welcher in einem ersten Zweig der Leistungsverzweigung angeordnet ist.

## Beschreibung

Die Erfindung betrifft eine Antriebsvorrichtung für ein Fahrzeug, insbesondere ein nicht spurgebundenes Fahrzeug, im einzelnen mit den Merkmalen aus dem Oberbegriff des Anspruchs 1.

Antriebssysteme in Form eines Hybridantriebes, d.h. einer Kombination aus einer Verbrennungskraftmaschine und einem Elektromotor, sind in einer Vielzahl von Ausführungen bekannt. Der Sonderdruck der Firma J. M. Voith GmbH, G 1407, offenbart ein dieselelektrisches Antriebssystem für Nutzfahrzeuge, insbesondere für Stadtbusse. Dieses umfaßt wenigstens einen mit wenigstens einem Antriebsrad wenigstens mittelbar koppelbaren und als sogenannten Radmotor fungierenden Elektromotor, welcher vorzugsweise als Transversalflußmaschine ausgeführt ist. Die einzelnen Radantriebsmotoren werden wenigstens von einer Wechselrichtereinheit mit elektrischer Leistung versorgt. Des weiteren ist eine im Traktionsbetrieb, d.h. im normalen Fahrbetrieb bei Kraftflußrichtung von der Verbrennungskraftmaschine zu dem das Antriebsrad antreibenden Elektromotor, als Generator betreibbare elektrische Maschine vorgesehen, welche ebenfalls vorzugsweise als Transversalflußmaschine ausgeführt sein kann. Die im Traktionsbetrieb als Generator betreibbare elektrische Maschine ist mechanisch mit einer Verbrennungskraftmaschine, insbesondere einem Dieselmotor, koppelbar. Der Generator ist mit den als Radantriebsmotoren fungierenden Elektromotoren elektrisch gekoppelt. Zur Erzeugung der elektrischen Leistung wird die als Generator betreibbare elektrische Maschine durch einen Vierquadrantenwechselrichter angesteuert. Für die Vorgabe der Sollwerte der Radmotoren (Drehmoment, Drehzahl) sowie die Drehzahlsteuerung der Verbrennungskraftmaschine ist eine übergeordnete Fahrsteuerung vorgesehen, welche u.a. in der Lage ist,den Fahrerwunsch auszuwerten. Die als Generator betreibbare elektrische Maschine wird wenigstens im Traktionsbetrieb als Generator betrieben, weshalb diese nachfolgend auch nur als Generator bezeichnet wird. Weitere dieselelektrische Antriebe für nicht schienengebundene Fahrzeuge sind beispielsweise aus dem europäischen Patent EP 0 527 145 B1 bekanntgeworden. Die Antriebsanordnung entsprechend dieser Druckschrift zeichnet sich dadurch aus, daß die Verbrennungskraftmaschine und der Generator zu einer sogenannten Verbrennungsmotor-Generatorbaugruppe zusammengefaßt wurden.

Weitere spezielle Antriebskonzepte für Fahrzeuge mit einer Verbrennungskraftmaschine und einem Generator, welcher einen als Antriebsmotor fungierenden Elektromotor speisen, sind aus "Drive Systems with Permanent Magnet Synchron Motors" in: Automotive Engineering, Februar 1995, Seite 75-81, bekanntgeworden.

Die Verwendung von dieselelektrischen Antrieben, insbesondere in Nutzfahrzeugen, ist in der Veröffentlichung "Ein elekrischer Einzelradantrieb für Citybusse der Zukunft", B. Wüst, R. Müller, A. Lange, in: Der Nahverkehr, 6/94, Albafachverlag, Düsseldorf, Seiten 1-7, beschrieben. Der Offenbarungsgehalt sämtlicher vorgenannter Druckschriften wird hiermit voll umfänglich in die vorliegende Anmeldung mit aufgenommen.

Ein Nachteil dieser bisherigen Antriebskonzepte bestand darin, daß stets mehr als ein Fahrmotor eingesetzt werden mußte, da bei einem möglichen Zentralantriebskonzept, bei welchem lediglich ein als Fahrmotor fungierender Elektromotor eingesetzt wird, welcher über den Generator gespeist wird, im Anfahrfall ein unzureichendes Drehmoment an den Achsen zur Verfügung gestellt wird.

Der Erfindung lag daher die Aufgabe zugrunde, eine Antriebsvorrichtung der eingangs genannten Art derart weiterzuentwickeln, daß der genannte Nachteil vermieden wird, insbesondere ist ein ausreichend hohes Drehmoment an den Achsen vom als Fahrmotor fungierenden Elektromotor im Anfahrfall bereitzustellen, wobei die Gesamtantriebsvorrichtung mit optimalem Wirkungsgrad betrieben werden soll. Des weiteren ist der konstruktive und steuerungstechnische Aufwand gering zu halten sowie eine Kompatibilität zu anderen Getriebekonzepten für Fahrzeuge herzustellen.

Die Lösung der Aufgabe ist erfindungsgemäß durch die Merkmale der Ansprüche 1 und 18 charakterisiert. Vorteilhafte Ausgestaltungen sind in den Unteransprüchen beschrieben.

Erfindungsgemäß ist in einer Antriebsvorrichtung, umfassend wenigstens eine Verbrennungskraftmaschine, eine mit der Verbrennungskraftmaschine in Kraftflußrichtung im Traktionsbetrieb betrachtet als Generator betreibbare elektrische Maschine und einen als Fahrmotor fungierenden elektrischen Antriebsmotor, zwischen dem als Fahrmotor fungierenden elektrischen Antriebsmotor und den Antriebsrädern eine Wandlergetriebebaueinheit angeordnet. Die Wandlergetriebebaueinheit umfaßt wenigstens einen hydrodynamischen Drehzahl-/Drehmomentenwandler und mechanische Getriebeelemente. Der hydrodynamische Drehzahl-/Drehmomentenwandler wird dabei in Leistungsverzweigung zu den mechanischen Getriebeelementen eingesetzt. Bei der Leistungsverzweigung wird dabei die an der Eingangswelle der Wandlergetriebebaueinheit eingeleitete Leistung auf mehrere Zweige aufgeteilt und an einer Ausgangswelle der Wandlergetriebebaueinheit wieder zusammengeführt. Die dazu erforderlichen Verteil- und/oder Sammelgetriebe können auch als Elemente für zusätzliche mechanische Getriebestufen mit verwendet werden.

Eine derartige Anordnung ermöglicht es zum einen, die Vorteile einer hydrodynamischen Leistungsübertragung zu nutzen, insbesondere kann das Verhältnis zwischen der An- und Abtriebsdrehzahl sich ohne Regelung selbsttätig stufenlos entsprechend der Belastung auf der Abtriebsseite, d.h. an den Rädern, einstellen. Da die Drehmomentenwandlung beim Stillstand des Turbinenrades am größten ist, steht zum Anfahren oder Beschleunigen das maximale Drehmoment zur Verfügung. Bei kleinen bzw. niedrigen Antriebsdrehzahlen kann über den hydrodynamischen Getriebezweig die Antriebseinrichtung, insbesondere die dieselelektrische Antriebsgruppe, vom Fahrzeug getrennt und nur noch ein kleines Restmoment übertragen werden, so daß ein Abwürgen vom Fahrzeug her nicht möglich ist. Der hydrodynamische Drehzahl-/Drehmomentenwandler ermöglicht es, das von der Antriebseinheit, d.h. dem als Fahrmotor fungierenden Antriebsmotor, bereitgestellte Drehmoment an der Abtriebswelle zu erhöhen und somit in ein höheres Anfahrmoment zu wandeln. Beispielsweise kann durch eine derartige Momentenwandlung das Drehmoment an der Abtriebswelle, d.h. am Turbinenrad des hydrodynamischen Drehzahl-/Drehmomentenwandlers, doppelt so groß sein wie das Eingangsmoment an der Wandlergetriebeeinheit, das vom Antriebsmotor zur Verfügung gestellt wird. Gleichzeitig wird hier durch die Verringerung des hydraulisch übertragbaren Leistungsanteils während der Anfahrphase aufgrund der Leistungsverzweigung der einer hydrodynamischen Leistungsübertragung anhaftende Nachteil eines geringen Wirkungsgrades durch Verluste bei der Leistungsübertragung, welche sich aus Reibungs- und Stoßverlusten zusammensetzen, weitestgehend ausgeschlossen. Im einzelnen kann der Wirkungsgrad bei der Leistungsübertragung von dem als Fahrmotor fungierenden Antriebsmotor zum Achsantrieb bzw. zum Antrieb der Räder durch die Verringerung des hydraulisch übertragbaren Leistungsanteiles während der Anfahrphase und der zunehmenden mechanischen Leistungsübertragung wesentlich verbessert werden. Dies äußert sich darin, daß während der Anfahrphase bereits bei geringeren Drehzahlverhältnissen ein höherer Wirkungsgrad eingestellt wird und der gesamte Wirkungsgradverlauf während der Anfahrphase im Kennfeld derart eine Veränderung erfährt, daß sich ein besserer Wirkungsgrad über einen weiteren Drehzahlbereich einstellt.

Durch die entsprechende Auslegung der Wandlergetriebebaueinheit genügt ein einziger als Fahrmotor fungierender elektrischer Antriebsmotor, da dessen bereitgestelltes Drehmoment mit der Wandlergetriebebaueinheit überhöht und gewandelt werden kann, was wiederum zu einer Reduzierung der Kosten führt.

Für die Ausführung der Wandlergetriebebaueinheit stehen im wesentlichen drei Grundvarianten zur Verfügung. Es wird im allgemeinen zwischen einer Ausführung einer Leistungsverzweigung mit einem Verteilergetriebe, einer Ausführung einer Leistungsverzweigung mit Sammelgetriebe und einer Mischform aus beiden unterschieden. Im erstgenannten Fall ist der hydrodynamische Drehzahl-/Drehmomentenwandler in einem ersten Getriebszweig einem Verteilergetriebe, welches der Eingangswelle der Wandlergetriebeeinheit nachgeordnet ist, zugeordnet. In diesem Fall bildet der erste Getriebezweig einen Abtrieb des Verteilergetriebes. Der zweite Getriebezweig bildet einen weiteren zweiten Abtrieb des Verteilergetriebes. Der zweite Getriebezweig, welcher auch als mechanischer Getriebezweig bezeichnet wird, kann dabei beispielsweise lediglich aus einer einfachen Übertragungswelle bestehen. Es ist jedoch theoretisch auch denkbar, daß im zweiten mechanischen Getriebezweig weitere mechanische Getriebestufen bzw. Übertragungseinrichtungen angeordnet sind. Bei dieser Ausführung steht im Anfahrpunkt die Wandlerturbine still.

Im zweiten Fall, d.h. bei Anordnung des hydrodynamischen Drehzahl-/Drehmomentenwandlers im ersten hydrodynamischen Getriebezweig, welcher der Eingangswelle der Wandlergetriebebaueinheit unmittelbar nachgeordnet ist, werden die über den ersten hydrodynamischen Getriebszweig und den zweiten mechanischen Getriebezweig geführten Leistungsanteile in einem Sammelgetriebe wieder zusammengeführt. In diesem Fall läuft im Anfahrpunkt des Getriebes der hydrodynamische Drehzahl-/Drehmomentenwandler im Gegenbremsbereich.

Bei einer Mischform kann sowohl im Bereich der Getriebseingangswelle ein Verteilergetriebe zur Aufteilung auf beide Getriebezweige, den mechanischen und den hydrodynamischen Getriebezweig, sowie vor der Ausgangswelle aus der Wandlergetriebebaueinheit ein Sammelgetriebe angeordnet sein. Der hydrodynamische Getriebezweig und der mechanische Getriebezweig sind dabei jeweils mit einem Ausgang aus dem Verteilergetriebe und einem Eingang in das Sammelgetriebe gekoppelt. Bei der äußeren Leistungsverzweigung liegt der Wandler also in einem der beiden Wellenstränge der Verzweigung. Damit wird nur ein Teil der Leistung hydraulisch übertragen. Das Gesamtgetriebe hat deshalb einen höheren Wirkungsgrad als der hydrodynamische Drehzahl-/Drehmomentenwandler allein, da die Gesamtverluste kleiner werden. Der hydrodynamische Drehzahl-/Drehmomentenwandler kann außerdem auch kleiner ausgeführt werden als ein einzelner Wandler, der die Gesamtleistung zu übertragen hätte. Bei den Möglichkeiten der Anordnungen der Leistungsverzweigung ist es jedoch erforderlich, daß an einer Verzweigungsstelle das Drehzahlverhältnis und an der anderen Verzweigungsstelle das Drehmomentenverhältnis eindeutig bestimmt sind. Drehzahlverhältnisbestimmend ist beispielsweise eine direkte Verbindung oder eine feste Übersetzung, drehmomentverhältnisbestimmend ist beispielsweise ein Differentialgetriebe.

Die mechanischen Getriebeelemente können in Form von Stirnradstufen, Planetenradsätzen u. ä. oder Mischformen aus vorhergenannten ausgeführt werden.

Bevorzugt wird eine Verzweigung mit Verteilergetriebe in Form eines Differentialwandlergetriebes eingesetzt. Wenigstens ein Planetenradgetriebe, vorzugsweise ein Planetenradsatz, verteilt dabei die Eingangsleistung, d.h. die an der Eingangswelle der Wandlergetriebebaueinheit anliegende Leistung auf einen hydraulischen und einen mechanischen Zweig. Werden die Drehzahlen der einzelnen Zweigwellen durch das Umlaufrädergetriebe so aufgeteilt, daß sich die Pumpendrehzahl erhöht, wenn die Drehzahl der anderen Zweigstelle sinkt, so entsteht eine starke Rückwirkung des mit der Leistungsverzweigung kombinierten Wandlers auf die Antriebsseite, d.h. den als Fahrmotor fungierenden elektrischen Antriebsmotor. Bei einer Ausführung des Wandlergetriebes als Differentialwandlergetriebe wird der Drehmomentenwandler mit dem Planetenradsatz, d.h. dem Differential dabei in der Weise kombiniert, daß ein Glied mit dem Pumpenrad des hydrodynamischen Drehzahl-/Drehmomentenwandlers, das zweite Glied des Planetenradsatzes mit der Antriebswelle, d.h. der Eingangswelle der Wandlergetriebebaueinheit und das dritte Glied mit der Abtriebswelle, d.h. der Ausgangswelle der Wandlergetriebebaueinheit verbunden ist, auf die über einen Freilauf oder ein schaltbares Planetenradgetriebe auch das Wandlerturbinenrad treibt. Mit steigender Abtriebsdrehzahl wird dann aufgrund der Wirkung des Differentials der hydrodynamisch übertragene Leistungsanteil verringert, während der mechanisch übertragene Anteil zunimmt. Etwa im Betriebspunkt seines besten Wirkungsgrades wird schließlich der Wandler automatisch überbrückt und die Leistung nur noch rein mechanisch übertragen. Dieses Differentialwandlerprinzip ermöglicht eine wirtschaftliche Leistungsübertragung, wobei der Vorteil der hydrodynamischen Energieübertragung und des stetigen und stabilen Zugkraftverlaufes über einen großen Geschwindigkeitsbereich erhalten bleibt, bei gleichzeitig optimalen Gesamtwirkungsgrad.

Das Wandlergetriebe zur Erfüllung der obengenannten Funktionen ist in die unterschiedlichsten Antriebsanordnungen integrierbar. Die als Generator im Traktionsbetrieb betreibbare elektrische Maschine kann räumlich getrennt von dem als Fahrmotor fungierenden elektrischen Antriebsmotor angeordnet sein; dies ist insbesondere dann der Fall, wenn der Fahrmotor im Bereich des Achsantriebes angeordnet ist. In diesem Fall besteht lediglich eine elektrische Kopplung zwischen den beiden Antriebsaggregaten über einen großen Teil des Fahrzeuges. Eine andere denkbare Möglichkeit besteht darin, die als Generator betreibbare elektrische Maschine und den als Fahrmotor fungierenden elektrischen Antriebsmotor in räumlicher Nähe zueinander anzuordnen. Die Leistungsübertragung von dem als Fahrmotor fungierenden elektrischen Antriebsmotor zum Achsantrieb bzw. zum Antrieb der Räder erfolgt dann über Wellenstränge. Die Wandlergetriebebaueinheit wird vorzugsweise zwischen dem als Fahrmotor fungierenden elektrischen Antriebsmotor und dem Wellenstrang angeordnet. Eine Anordnung in Kraftflußrichtung hinter dem Wellenstrang ist ebenfalls denkbar, führt jedoch dazu, daß die Leistungsübertragung über den Wellenstrang mit hohen Drehzahlen erfolgt. Die sich daraus ergebenden schwingungstechnischen Probleme können durch eine Anordnung der Wandlergetriebebaueinheit vor dem Wellenstrang in Kraftflußrichtung vermieden werden.

Eine bevorzugte Ausführung besteht darin, die als Generator betreibbare elektrische Maschine, die Wechselrichterbaueinheit und den als Fahrmotor fungierenden elektrischen Antriebsmotor in einer Baugruppe zusammenzufassen. Diese Baugruppe bildet dann ein sogenanntes elektrisches Getriebe, welches hinsichtlich des benötigten Bauraumes einem konventionellen Automatikgetriebe gleichgesetzt werden kann. Durch die Schaffung einer derartigen Baugruppe kann somit ein hohes Maß an Kompatibilität zwischen verschiedenen Fahrzeugen realisiert werden, da das konventionelle Getriebe durch die elektrische Getriebebaugruppe ausgetauscht werden kann, ohne daß zusätzliche Umbauarbeiten sowie Anpassungsarbeiten erforderlich sind.

Vorzugsweise sind die als Generator betreibbare elektrische Maschine und der als Fahrmotor fungierende elektrische Antriebsmotor als Transversalflußmaschine ausgeführt. Es besteht hierbei auch die Möglichkeit, elektrische Maschinen gleichen Bautyps und gleicher Auslegung für den Generator und den Fahrmotor zu verwenden.

Neben der Antriebsvorrichtung stellt die Erfindung auch ein Verfahren zur Erhöhung des auf die Fahrzeugachsen eines nicht spurgebundenen Fahrzeugs des mit dieselelektrischem Antrieb übertragenen Drehmomentes bei gleichzeitiger Erzielung eines optimalen Wirkungsgrades und einer möglichen hydrodynamischen Leistungsübertragung über einen breiteren Betriebsbereich zur Verfügung. Gemäß dem erfindungsgemäßen Verfahren wird ein Anfahrvorgang des nicht spurgebundenen Fahrzeuges erfaßt. Wird ein solcher der Steuerung gemeldet, so veranlaßt diese die Inbetriebnahme des hydrodynamischen Drehzahl-/Drehmomentenwandlers an der Wandlergetriebebaueinheit. Durch die vorerst rein hydraulische Leistungsübertragung wird das vom Fahrmotor zur Verfügung gestellte Drehmoment in ein höheres Anfahrmoment gewandelt. Mit Hilfe von Sensoren wird dann die Fahrgeschwindigkeit bzw. eine im Fahrzustand wenigstens mittelbar charakterisierende Größe bestimmt. Mit zunehmender Drehzahl wird der hydrodynamisch übertragene Leistungsanteil verringert und der mechanisch übertragbare nimmt zu. Wird ein vorgegebener Wert für die Fahrgeschwindigkeit bzw. eine den Fahrzustand wenigstens mittelbar charakterisierende Größe erreicht, so wird wiederum ein Signal an eine Steuerungseinrichtung übermittelt. Dieses Signal veranlaßt die Steuerungseinrichtung, den hydrodynamischen Drehzahl-/Drehmomentenwandler ganz zu überbrücken, bzw. aus der Drehmomentenübertragung herauszunehmen, beispielsweise durch Abkopplung oder Feststellung des Pumpenrades, was eine rein mechanische Leistungsübertragung zur Folge hat. Der Fahrmotor steht dann über dem mechanischen Getriebezweig der Wandlergetriebebaueinheit mit dem Achsantrieb in Verbindung. Durch entsprechende Wahl des vorbestimmten Fahrzeuggeschwindigkeitswertes bzw. des den aktuellen Fahrzeugstand wenigstens mittelbar charakterisierenden Wertes wird die Zeit, in der die Momentenwandlung beim Anfahrvorgang hydraulisch-mechanisch wirksam ist, eingestellt. Diese Parameter können vom zuständigen Fachmann in Bezug auf die beispielsweise für unterschiedliche Steigungen sowie Gefällestrecken benötigen Anfahrmomente und den Kraftstoffverbrauch hin optimiert werden.

Die Erfindung wird nachfolgend anhand der Figuren beispielhaft beschrieben. Es zeigen:
- Fig. 1a: den schematischen Aufbau eines erfindungsgemäß gestalteten Antriebsstranges mit einem Wandlergetriebe in Form eines Differentialwandlers;
- Fig. 1b: einen Ausschnitt A aus Fig. 1a;
- Fig. 1c: einen Antriebsstrang entsprechend der Figuren 1a und 1b mit zugeordneter Steuer- und/oder Regelvorrichtung;
- Fig. 2: weitere Ausführungsvarianten für eine Wandlergetriebeeinheit mit äußerer Leistungsverzweigung in schematischer Darstellung.

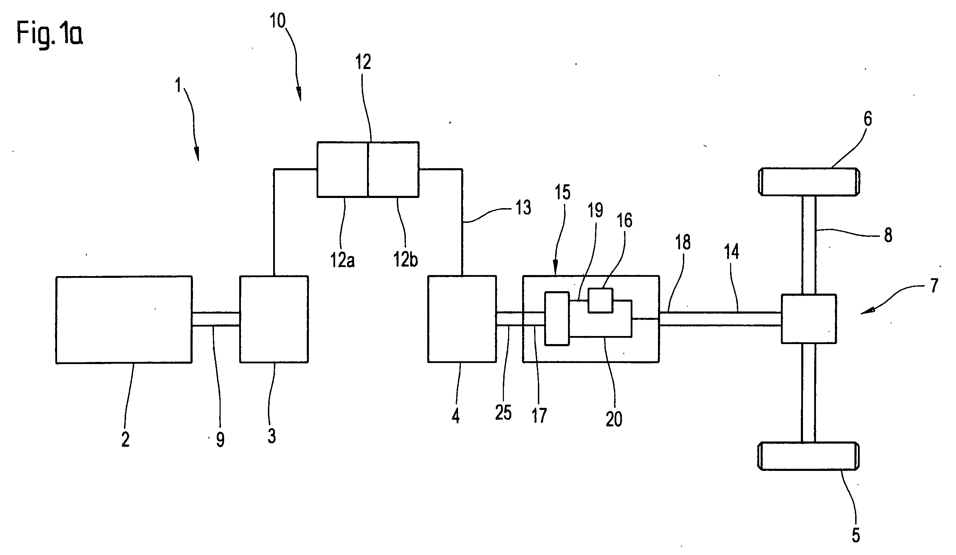

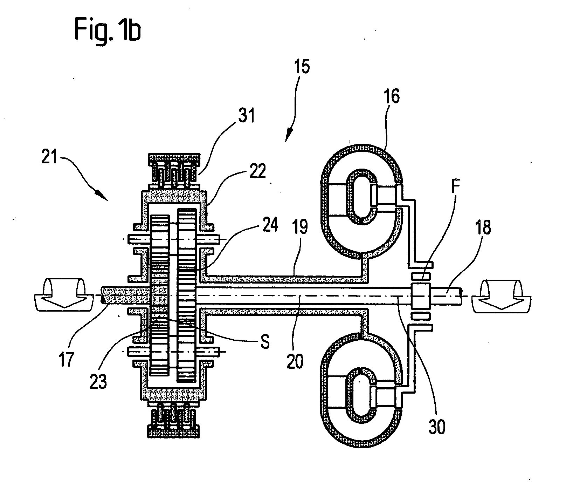

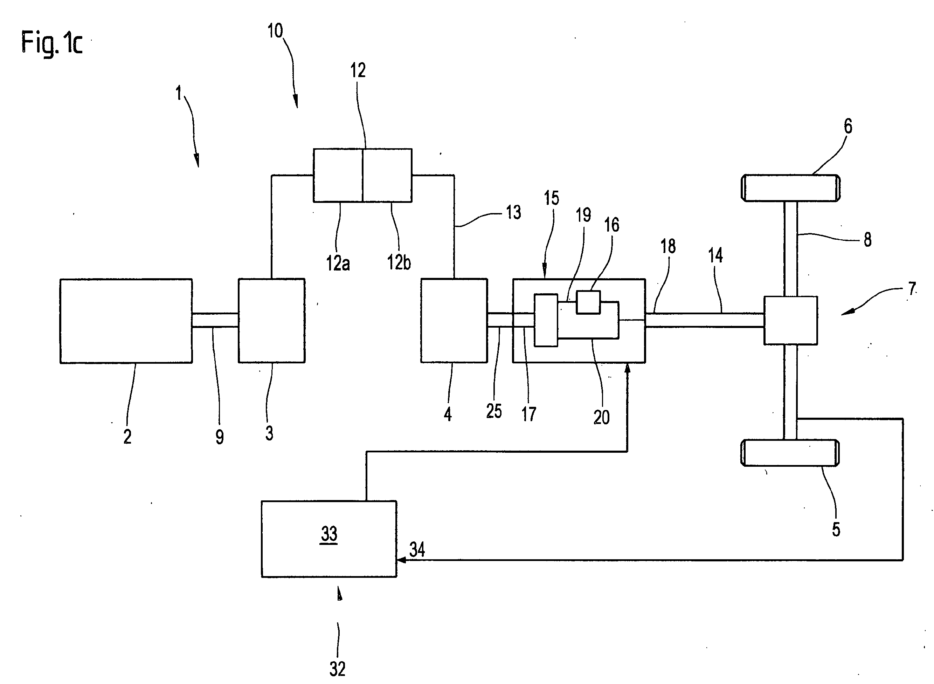

Die Figur 1 verdeutlicht schematisch eine erfindungsgemäße Ausführung einer Antriebsvorrichtung 1 für ein Fahrzeug, insbesondere ein nicht schienengebundenes Fahrzeug. Die Antriebsvorrichtung 1 umfaßt eine Verbrennungskraftmaschine 2, welche vorzugsweise als Dieselmotor ausgebildet ist, eine im Traktionsbetrieb des Fahrzeuges als Generator betreibbare elektrische Maschine 3 und einen als Fahrmotor fungierenden, im Traktionsbetrieb als Motor betreibbaren elektrischen Antriebsmotor 4. Der elektrische Antriebsmotor 4 ist wenigstens mittelbar mit den anzutreibenden Rädern 5 und 6 bzw. im dargestellten Fall dem Achsantrieb 7 der Fahrzeugachse 8 gekoppelt.

Die als Generator im Traktionsbetrieb betreibbare elektrische Maschine 3 ist mit der Verbrennungskraftmaschine 2 mechanisch gekoppelt. Die mechanische Kopplung kann, wie im Beispiel dargestellt, im einfachsten Fall starr erfolgen. Weitere Möglichkeiten bestehen in der Realisierung der mechanischen Kopplung 9 mittels eines nicht schaltbaren Kupplungselementes mit integrierter oder zugeordneter Dämpfungseinrichtung oder einer schaltbaren Kupplungseinrichtung, ebenfalls mit integrierter oder zugeordneter Dämpfungseinrichtung. Die Kopplung zwischen der im Traktionsbetrieb als Generator betreibbaren elektrischen Maschine 3 und dem als Fahrmotor fungierenden elektrischen Antriebsmotor 4 erfolgt über eine elektrische Kopplung 10. Diese umfaßt eine erste Leitung 11, die die als Generator im Traktionsbetrieb betreibbare elektrische Maschine mit einer Umrichterbaugruppe 12, bestehend aus einem Generator-Wechselrichter 12a sowie einem Motor-Wechselrichter 12b, verbindet und einer Leitung 13, welche den Motor-Wechselrichter 12b mit dem als Fahrmotor fungierenden elektrischen Antriebsmotor 4 koppelt. Die elektrischen Maschinen, insbesondere die als Generator im Traktionsbetrieb betreibbare elektrische Maschine 3 und der elektrische Antriebsmotor 4 sind jeweils vorzugsweise als Transversalflußmaschine ausgeführt. In einer besonders bevorzugten Ausführungsform ist vorgesehen, daß sowohl für den Generator wie auch für den elektrischen Antriebsmotor 4 jeweils eine Transversalflußmaschine gleichen Typs, beispielsweise eine Transversalflußmaschine zur Erzeugung gleicher Leistung, zu verwenden.

Rein konstruktiv kann die als Generator betreibbare elektrische Maschine 3 an die elektrische Antriebsmaschine 4 angeflanscht werden. Eine besonders kompakte Antriebsanordnung ergibt sich dann, wenn anstelle einer direkten Anflanschung der als Generator betreibbaren elektrischen Maschine 3 an den als Fahrmotor fungierenden elektrischen Antriebsmotor 4 der Generator 3, das Umrichterteil 12 sowie der elektrische Antriebsmotor 4 zu einer sogenannten elektrischen Getriebeeinheit zusammengefaßt werden. Diese elektrische Getriebeeinheit kann dann anstelle beispielsweise eines Automatgetriebes verwendet werden. Auf diese Art und Weise können die unterschiedlichen Antriebskonzepte, nämlich Antriebsstrang mit Automatgetriebe oder auch dieselelektrischer Antriebsstrang, sehr leicht und ohne große Umbauarbeiten gegeneinander ausgetauscht werden.

Die Kopplung des als Fahrmotor fungierenden elektrischen Antriebsmotors 4, insbesondere seiner Abtriebswelle 25 mit den anzutreibenden Rädern 5 und 6, erfolgt im dargestellten Fall über einen Wellenstrang, beispielsweise in Form einer Gelenkwelle 14, welche mit dem Achsantrieb 7 der Fahrzeugachse 8 gekoppelt ist. Erfindungsgemäß ist nun vorgesehen, daß zwischen dem als Fahrmotor fungierenden elektrischen Antriebsmotor 4 und den anzutreibenden Rädern 4, 5 oder der Fahrzeugachse 8, im dargestellten Fall zwischen dem elektrischen Antriebsmotor 4 und dem Wellenstrang 14, eine Wandlergetriebebaueinheit 15 angeordnet ist. Unter einer Wandlergetriebebaueinheit 15 wird dabei ein Getriebe verstanden, bei der ein hydrodynamischer Drehzahl-/Drehmomentenwandler 16 mit zusätzlichen mechanischen Elementen gekoppelt wird, um eine Veränderung oder Erweiterung des Betriebsbereiches des Getriebes und damit in entsprechender Weise auch der Antriebsvorrichtung 1 zu erreichen. Bei der Leistungsverzweigung wird dabei die an der Eingangswelle 17 der Wandlergetriebeeinheit 15 eingeleitete Leistung auf mehrere Zweige aufgeteilt und an der Ausgangswelle 18 wieder zusammengeführt. Die dazu notwendigen Verteil- und Sammelgetriebe können auch als Elemente für zusätzliche mechanische Getriebestufen mitverwendet werden, jedoch dürfen nicht beide gleichzeitig unveränderliche Drehzahlübersetzungen aufweisen. Erfindungsgemäß wird der hydrodynamische Wandler 16 in der Wandlergetriebebaueinheit 15 in äußerer Leistungsverzweigung angeordnet. Dies bedeutet, daß nach Aufteilung der Leistung in zwei getrennte Zweige, einen ersten Zweig 19 und einen zweiten Zweig 20, der hydrodynamische Drehzahl-/Drehmomentenwandler 16 nur in einem der beiden Zweige liegt. Damit wird nur ein Teil der Leistung hydraulisch übertragen. Das Gesamtgetriebe, insbesondere die Wandlergetriebebaueinheit 15, hat deshalb einen höheren Wirkungsgrad als der hydrodynamische Drehzahl-/Drehmomentenwandler 16 für sich allein, da die Gesamtverluste geringer werden. Der hydrodynamische Drehzahl-/Drehmomentenwandler kann zudem kleiner ausgeführt werden als ein hydrodynamischer Wandler 16, welcher die Gesamtleistung zu übertragen hätte.

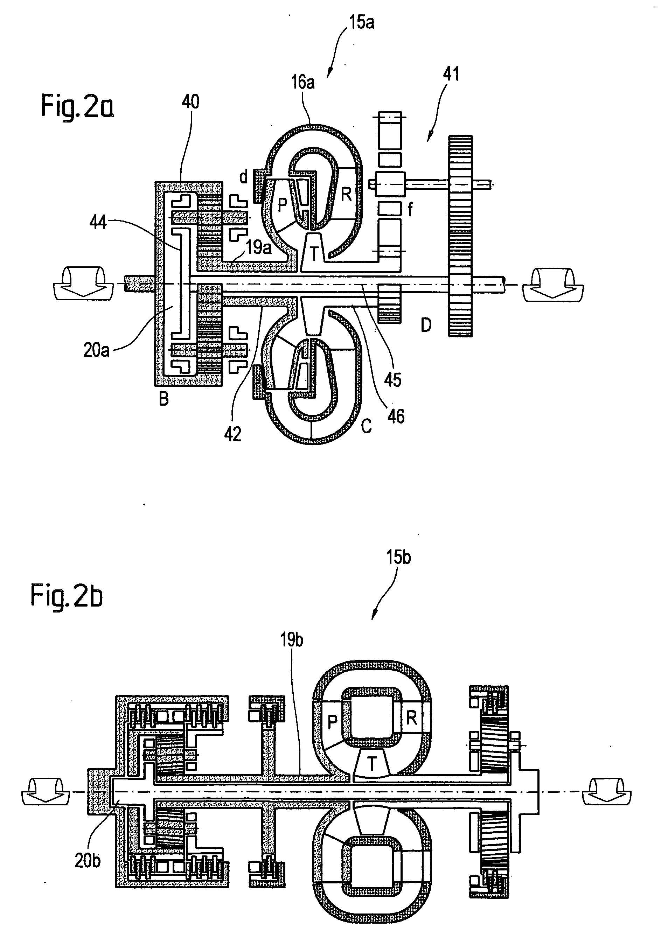

Ausführungen für die Anordnung eines Wandlers in äußerer Leistungsverzweigung sind in der Figur 2 dargestellt.

Bei den Anordnungen von Wandlergetriebeeinheiten 15 mit äußerer Leistungsverzweigung ist es erforderlich, daß an einer ersten Verzweigungsstelle das Drehzahlverhältnis und an der anderen zweiten Verzweigungsstelle das Drehmomentverhältnis eindeutig bestimmt wird. Drehzahlverhältnisbestimmend ist eine direkte Verbindung oder eine feste Übersetzung, drehmomentverhältnisbestimmend ist beispielsweise ein Differentialgetriebe.

Im dargestellten Fall ist die Wandlergetriebebaueinheit 15 vorzugsweise in Form eines Differentialwandlergetriebes ausgeführt. Dieses umfaßt den hydrodynamischen Drehzahl-/Drehmomentenwandler 16 in einem ersten hydrodynamischen Zweig 19 und des weiteren einen Planetenradsatz 21. Der Planetenradsatz 21, umfassend wenigstens ein erstes Glied 22, ein zweites Glied 23 sowie ein drittes Glied 24, wird mit dem Drehzahl-/Drehmomentenwandler 16 in der Weise kombiniert, daß das erste Glied 22 mit dem Pumpenrad P des hydrodynamischen Drehzahl-/Drehmomentenwandlers 16, das zweite Glied 23 des Planetenradsatzes 21 mit der Antriebswelle, d.h. der Eingangswelle 17 und das dritte Glied 24 des Planetenradsatzes 21 mit der Abtriebswelle, d.h. der Ausgangswelle 18 der Wandlergetriebebaueinheit 15 verbunden ist, auf die über einen Freilauf oder ein schaltbares Planetengetriebe auch das Wandlerturbinenrad T treibt. Der hydrodynamische Drehzahl-/Drehmomentenwandler 16 kann beispielsweise wie in "Hydrodynamik in der Antriebstechnik", Krausskopfverlag, Mainz, 1987 offenbart, ausgebildet sein. Zur Ausführung eines Differentialwandlergetriebes wird ebenfalls auf diese Druckschrift, auf S. 158-195, verwiesen. Der Offenbarungsgehalt diesbezüglich wird voll umfänglich in diese Anmeldung mit einbezogen.

Mit steigender Abtriebsdrehzahl, d.h. beispielsweise der Drehzahl der Räder, wird aufgrund der Wirkung des Differentials der hydrodynamisch übertragene Leistungsanteil über den hydrodynamischen Drehzahl-/Drehmomentenwandler (16) verringert, während der mechanisch übertragbare Anteil zunimmt. Dies führt zu einem höheren Gesamtwirkungsgrad für das Getriebe als bei rein hydraulischer Energieübertragung. Vorzugsweise wird im Betriebspunkt seines besten Wirkungsgrades der hydrodynamische Drehzahl-/Drehmomentenwandler aus der Leistungsübertragung herausgenommen und die Leistung rein mechanisch übertragen, beispielsweise durch automatische Überbrückung oder Entkoppelung des ersten Getriebezweiges 19 oder des Wandlers aus dem ersten Getriebezweig 19 oder dem Festsetzen des Pumpenrades P des hydrodynamischen Drehzahl-/Drehmomentenwandlers 16. Zur Überbrückung des hydrodynamischen Drehzahl-/Drehmomentenwandlers 16 wird eine sogenannte Überbrückungskupplung verwendet. Betreffend die Ausführung einer Wandler-Überbrückungskupplung wird auf "Gerigk, Bruhn, Danner, Endruschat, Göbert, Gross, Komoll, Kraftfahrzeugtechnik, Westermannverlag, 2. Auflage 1994, Seite 349-352" verwiesen, deren Offenbarungsgehalt in die Anmeldung voll umfänglich mit einbezogen wird.
Des weiteren besteht jedoch auch die Möglichkeit, das Pumpenrad des hydrodynamischen Drehzahl-/Drehmomentenwandlers festzusetzen.

Das Differentialwandlerprinzip ermöglicht eine wirtschaftliche Leistungsübertragung, wobei der Vorteil der hydrodynamischen Energieübertragung im Anfahrbereich, insbesondere eines stetigen und stabilen Zugkraftverlaufes über einen großen Geschwindigkeitsbereich erhalten bleiben kann.

Die Ausführung der Wandlergetriebebaueinheit 15 in Form eines Differentialwandlergetriebes stellt eine bevorzugte Ausführungsform dar. Denkbar sind jedoch auch andere Anordnungen eines hydrodynamischen Drehzahl-/Drehmomentenwandlers in äußerer Leistungsverzweigung mit anderen mechanischen Getriebeelementen, beispielsweise Stirnradstufen. Die dem als Fahrmotor fungierenden elektrischen Antriebsmotor 4 im Traktionsbetrieb nachgeschaltete Wandlergetriebebaueinheit 15 ermöglicht dabei die Nutzung der Vorteile hydrodynamischer Kraftübertragung im Anfahrbereich, d.h. eine stufenlose geräuscharme Drehmomentenwandlung bei verschleißarmer Betriebsweise, wobei der hydrodynamische Drehzahl-/Drehmomentenwandler selbsttätig arbeitet bei Befüllung. Des weiteren wird der hydrodynamische Drehzahl-/Drehmomentenwandler 16 im Anfahrbereich zu einer Erhöhung der Drehmomentenübersetzung, d.h. des vom als Fahrmotor fungierenden elektrischen Antriebsmotor 4 an die Fahrzeugachse 8 bzw. die Räder 5 und 6 über den Wellenstrang 14 abgegebenen Drehmomentes. Des weiteren können mittels der Leistungsverzweigung die Nachteile einer hydrodynamischen Leistungsübertragung bei größer werdender Drehzahl, insbesondere im Synchronbetriebsbereich, ausgeschlossen werden, indem in diesem Fall die Übertragung der Leistung nicht mehr hydraulisch, sondern in zunehmendem Maße mechanisch erfolgt.

Die Figur 1b verdeutlicht einen Ausschnitt A entsprechend der Figur 1a aus der Antriebsvorrichtung 1. In diesem Ausschnitt ist das Differentialwandlergetriebe 15 in vergrößerter Darstellung wiedergegeben. Dabei ist die Eingangswelle mit 17, die Ausgangswelle mit 18, der Planetenradsatz mit 21 sowie der hydrodynamische Drehzahl-/Drehmomentenwandler mit 16 bezeichnet. Das erste Glied des Planetenradsatzes 22 wird hier vom Planetenträger gebildet. Als zweites Glied 23 des Planetenradsatzes 21 fungiert das Sonnenrad s, als drittes Glied das Sonnenrad r. Der Planetenradsatz 21 fungiert hier als Verteilgetriebe. Dieses verzweigt das an der Eingangswelle 17 anliegende Moment auf einen hydrodynamischen Zweig 19 über den hydrodynamischen Drehzahl-/Drehmomentenwandler 16 und auf einen mechanischen Zweig 20 über eine Zwischenwelle 30. Der hydrodynamische Leistungsanteil wird vom Pumpenrad P des hydrodynamischen Drehzahl-/Drehmomentenwandlers über das Turbinenrad T und den Freilauf F ebenfalls auf die Zwischenwelle 30 übertragen. Mit zunehmender Fahrgeschwindigkeit nimmt die mechanisch übertragene Leistung zu. Hat der hydrodynamische Drehzahl-/Drehmomentenwandler den Betriebspunkt seines besten Wirkungsgrades überschritten, so wird automatisch in einen rein mechanischen Betriebszustand umgeschaltet, indem eine Bremseinrichtung 31 das Pumpenrad P stillsetzt. Das Turbinenrad T bleibt dann ebenfalls stehen, da der Freilauf F eine Mitnahme durch die Zwischenwelle 30 verhindert. Die Umschaltung selbst kann auch vom Fahrer, beispielsweise über das Fahrpedal bzw. einen Fahrschalter, beeinflußt werden. Eine derartige Beeinflußbarkeit mittels einer Steuer- oder Regelvorrichtung 32 ist in der Figur 1c dargestellt.

Die Ausführung einer Wandlergetriebeeinheit 15 in Form eines Differentialwandlergetriebes wie in den Figuren 1a und 1b beschrieben, stellt lediglich eine mögliche Ausführungsvariante dar, welche jedoch aufgrund der Kompaktheit bevorzugt eingesetzt wird. Weitere Ausführungen mit Leistungsverzweigung sind denkbar.

Die Figur 1c verdeutlicht eine Ausführung entsprechend der Figur 1a mit zusätzlicher Steuer- bzw. Regelvorrichtung 32. Diese umfaßt wenigstens eine Steuereinrichtung 33. Die Steuereinrichtung 33 weist wenigstens einen Eingang 34 auf, an welchem die aktuellen Fahrgeschwindigkeits- und/oder Beschleunigungssignale anliegen. In der Steuereinrichtung 33 ist des weiteren eine Vergleichseinrichtung integriert, welche die aktuell ermittelten Fahrgeschwindigkeits- und/oder Beschleunigungswerte mit vorgebbaren Werten vergleicht.

Erreicht die Fahrgeschwindigkeit, insbesondere die an der Eingangswelle 17 der Wandlergetriebebaueinheit 15 anliegende Drehzahl einen vorgegebenen Wert, der beispielsweise in einem Speicherbereich der Steuereinrichtung 33 abgelegt sein kann, wird ein Ausgangssignal gesetzt und über eine Ausgangsleitung 35, bezogen auf eine Anordnung eines Differentialwandlergetriebes gemäß den Figuren 1a und 1b, die Bremseinrichtung 31 am Planetenradsatz 21 derart betätigt, daß der Kraftfluß zwischen der Eingangswelle 17 und dem hydrodynamischen Drehzahl-/Drehmomentenwandler 16 unterbrochen wird. Der Drehmomentenwandler 16 ist dann an der Leistungsübertragung nicht mehr beteiligt. Die Wahl des vorgegebenen Wertes erfolgt vorzugsweise derart, daß nach Erreichen einer Drehzahl, welche den hydrodynamischen Wandler mit optimalem Wirkungsgrad betreibt, dieser aus dem Kraftfluß herausgenommen wird. Die Ansteuerung der Bremseinrichtung 31 kann vollautomatisch oder aber auch beispielsweise vom Fahrer über das Fahrpedal bzw. den Fahrschalter beeinflußt werden. Für einige Einsatzfälle kann es auch vorteilhaft sein, die Umschaltung auch im Teillastgebiet derart abhängig zu machen, daß bei niedrigerer Fahrgeschwindigkeit umgeschaltet wird.

Bei der hier beschriebenen Möglichkeit der Unterbrechung der hydraulischen Übertragung der Leistung durch Festsetzen des Pumpenrades P handelt es sich um eine Möglichkeit von vielen. Denkbar ist beispielsweise auch das Vorsehen einer Kupplungseinrichtung in Kraftflußrichtung im Fraktionsbetrieb vor dem hydrodynamischen Wandler, welche den ersten Leistungszweig von der Getriebeausgangswelle 17 abkoppelt. Die Auswahl der geeigneten Möglichkeit liegt im Ermessen des Fachmannes.

Des weiteren besteht die hier im einzelnen nicht dargestellte Möglichkeit, den zweiten mechanischen Getriebezweig 20 diese mit zusätzlichen Schaltstufen zu versehen. Dies kann im einzelnen zu einer erheblichen Erweiterung des Betriebsbereiches der Gesamtantriebsanordnung führen. Zusätzlich besteht auch die Möglichkeit, primär am hydrodynamischen Drehzahl-Drehzahlwandler Möglichkeiten zur Füllungsgradänderung im Kreislauf vorzusehen. Es besteht dann die Möglichkeit, eine bestimmte Antriebsvorrichtung für eine Vielzahl von Einsatzfällen mit den gleichen Komponenten auszuführen.

Beim hydrodynamischen Drehzahl-/Drehmomentenwandler kann es sich um einen Gleichlaufwandler oder aber um einen sogenannten Gegenlaufwandler handeln. Beim Gleichlaufwandler werden neben einer hohen Anfahrzugkraft eine stetige automatische Anpassung an die Belastung erzielt. Der Gegenlaufwandler, bei dem das axial durchströmte Turbinenlaufrad T entgegengesetzt zum Pumpenlaufrad P dreht, kann neben einer hohen Anfahrwandlung ein günstiger Wirkungsgradverlauf und unter der Voraussetzung einer entsprechenden Auslegung in Verbindung mit einem Eingangsdifferential eine geringe Motordrehzahldrückung erzielt werden.

Zusätzlich kann der hydrodynamische Drehmomenten-/Drehzahlwandler 16 auch als Bremseinrichtung genutzt werden.

Die Figuren 2a und 2b verdeutlichen Ausführungsmöglichkeiten einer Wandlergetriebebaueinheit 15, insbesondere eines Differentialwandlergetriebes. In den Figuren 2a und 2b sind dabei Ausführungen mit Gegenlaufwandler dargestellt. Die einzelnen Wandlergetriebebaueinheiten 15a und 15b umfassen hier jeweils einen hydrodynamischen Zweig 19a bzw. 19b und einen zweiten mechanischen Getriebezweig 20a bzw. 20b. In der Figur 2a ist der hydrodynamische Drehzahl-/Drehmomentenwandler 16a in baulicher Hinsicht zwischen einem Verteilergetriebe 40 und einem Sammelgetriebe 41 angeordnet. Der hydrodynamische Drehzahl-/Drehmomentenwandler 16a ist im ersten hydrodynamischen Zweig 19a angeordnet. Dieser bildet einen Ausgang 42 aus dem Verteilergetriebe 40. Ein zweiter Ausgang 44 aus dem Verteilergetriebe 40 wird vom mechanischen Getriebezweig gebildet. Der mechanische Getriebeteil umfaßt eine Verbindungswelle 45, welche mit einem Sammelgetriebe 41 gekoppelt ist. Der Abtrieb des mechanischen Getriebezweiges bildet somit einen Eingang des Sammelgetriebes 41, während ein anderer zweiter Eingang 46 vom hydrodynamischen Drehmomenten-/Drehzahlwandler 16a, insbesondere der Kopplung mit dem Turbinenrad T, gebildet wird. Am Sammelgetriebe 41 werden die einzelnen Leistungsanteile, welche über den hydrodynamischen ersten Zweig 19a und den mechanischen Zweig 20a geführt wurden, wieder zusammengeführt.

Einen prinzipiell ähnlichen Aufbau zeigt die Figur 2b, jedoch unterscheidet diese sich hinsichtlich des Aufbaus von Verteilergetriebe und Sammelgetriebe.

Die konkrete konstruktive Auslegung einer Wandlergetriebebaueinheit, insbesondere einer Differentialwandlergetriebebaueinheit, liegt im Ermessen des Fachmannes. Dabei ist die Auslegung des hydrodynamischen Drehzahl-/Drehmomentenwandlers sowie der mechanischen Getriebestufe bzw. der Getriebestufen an die Anforderung des konkreten Einsatzfalles anzupassen bzw. vorzunehmen. Weitere Ausführungen für Wandlergetriebe sind dem Druckwerk "Hydrodynamik in der Antriebstechnik", Vereinigte Fachverlage, Krausskopf Engineer Digest, Mainz, 1987, Seite 153-195, zu entnehmen. Der Offenbarungsgehalt dieses Druckwerkes bezüglich der Ausführungen von Differentialwandlergetrieben soll hiermit voll umfänglich in den Offenbarungsgehalt dieser Anmeldung mit aufgenommen werden.

## Patentansprüche

1. Antriebsvorrichtung für ein Fahrzeug, insbesondere ein nicht spurgebundenes Fahrzeug,
1.1 mit einer Verbrennungskraftmaschine (2);
1.2 mit einer im Traktionsbetrieb als Generator E betreibbaren elektrischen Maschine (3);
1.3 mit einem wenigstens mittelbar mit einem Achsantrieb (7) und/oder den anzutreibenden Rädern (5, 6) koppelbaren elektrischen Antriebsmotor (4); **gekennzeichnet durch** die folgenden Merkmale:
1.4 zwischen dem elektrischen Antriebsmotor und den anzutreibenden Rädem (5, 6) bzw. dem Achsantrieb (7) ist eine Drehzahl-/Drehmomentenübertragungs- und Wandlungseinrichtung in Form einer Wandlergetriebebaueinheit (15) mit Leistungsverzweigung angeordnet;
1.5 die Wandlergetriebebaueinheit (15) umfaßt wenigstens einen hydrodynamischen Drehzahl-/Drehmomentenwandler (16, 16a, 16b, 16c), welcher in einem ersten Zweig der Leistungsverzweigung (19) angeordnet ist.

2. Antriebsvorrichtung nach Anspruch 1, **dadurch gekennzeichnet, daß** der zweite Zweig (20) der Wandlergetriebbaueinheit (15) mechanische Übertragungselemente umfaßt.

3. Antriebsvorrichtung nach einem der Ansprüche 1 oder 2, **gekennzeichnet durch** die folgenden Merkmale:
3.1 eine Eingangswelle (17) der Wandlergetriebebaueinheit (15) ist mit dem ersten Getriebezweig (19) und dem zweiten Getriebezweig (20) gekoppelt;
3.2 die beiden Getriebezweige (19, 20), erster Getriebezweig (19) und zweiter Getriebezweig (20), sind über ein Sammelgetriebe (41) mit der Ausgangswelle der Wandlergetriebebaueinheit gekoppelt.

4. Antriebsvorrichtung nach einem der Ansprüche 1 bis 3, **dadurch gekennzeichnet, daß** die Wandlergetriebebaueinheit (15) ein Verteilergetriebe (21, 40) umfaßt, welches die Eingangswelle (17) der Wandlergetriebebaueinheit (15) mit den beiden Getriebezweigen (19, 20), erster Getriebezweig (19) und zweiter Getriebezweig (20), koppelt.

5. Antriebsvorrichtung nach Anspruch 4, **dadurch gekennzeichnet, daß** das Verteilergetriebe (21, 40) als Differentialgetriebe, umfassend wenigstens einen Planetenradsatz, ausgeführt ist.

6. Antriebsvorrichtung nach Anspruch 5, **gekennzeichnet durch** die folgenden Merkmale:
6.1 ein erstes Glied (22) des Differentialgetriebes ist mit einem Pumpenrad (P) des hydrodynamischen Drehmomenten-/Drehzahlwandlers (16) gekoppelt;
6.2 ein zweites Glied (23) des Differentialgetriebes ist mit der Eingangswelle (17) der Wandlergetriebebaueinheit gekoppelt;
6.3 ein drittes Glied (24) des Differentialgetriebes steht mit der Ausgangswelle (18) der Wandlergetriebebaueinheit (15) wenigstens mittelbar in Drehverbindung;
6.4 es sind Mittel vorgesehen zur Kopplung des Turbinenrades (T) des hydrodynamischen Drehmomenten-/Drehzahlwandlers (16) mit der Ausgangswelle (18) der Wandlergetriebebaueinheit.

7. Antriebsvorrichtung nach Anspruch 6, **dadurch gekennzeichnet, daß** das Mittel ein Freilauf (F) ist.

8. Antriebsvorrichtung nach Anspruch 6, **dadurch gekennzeichnet, daß** das Mittel ein schaltbares Planetengetriebe ist.

9. Antriebsvorrichtung nach einem der Ansprüche 6 bis 8, **dadurch gekennzeichnet, daß** dem Differential eine Bremseinrichtung (31) derart zugeordnet ist, daß bei Betätigung das Pumpenrad (P) festgesetzt wird.

10. Antriebsvorrichtung nach einem der Ansprüche 1 bis 9, **dadurch gekennzeichnet, daß** Mittel vorgesehen sind, welche den ersten Leistungszweig (19) von der Eingangswelle (17) der Wandlergetriebeübertragungseinheit (15) abkoppeln.

11. Antriebsvorrichtung nach Anspruch 10, **dadurch gekennzeichnet, daß** eine Steuervorrichtung (32) vorgesehen ist, die die Mittel (F/31) derart ansteuert, daß bei Anfahrvorgängen die hydrodynamische Leistungsübertragung ab Erreichen eines bestimmten Drehzahlverhältnisses zwischen der Eingangswelle (17) und der Ausgangswelle (18) der Wandlergetriebebaueinheit (15) unterbricht.

12. Antriebsvorrichtung nach einem der Ansprüche 1 bis 11, **dadurch gekennzeichnet, daß** der Antriebsmotor (4) im Fahrzeugchassis angeordnet ist.

13. Antriebsanordnung nach einem der Ansprüche 1 bis 12, **dadurch gekennzeichnet, daß** der Antriebsmotor (4) in einer Zentralmotorenanordnung angeordnet ist.

14. Antriebsvorrichtung nach einem der Ansprüche 1 bis 13, **dadurch gekennzeichnet, daß** die als Generator (3) betreibbare elektrische Maschine und der Antriebsmotor (4) zu einer elektrischen Getriebebaueinheit zusammengefaßt sind.

15. Antriebsvorrichtung nach einem der Ansprüche 1 bis 14, **dadurch gekennzeichnet, daß** der Antriebsmotor (4) eine Transversalflußmaschine ist.

16. Antriebsvorrichtung nach einem der Ansprüche 1 bis 15, **dadurch gekennzeichnet, daß** die als Generator betreibbare elektrische Maschine (3) als Transversalflußmaschine ausgeführt ist.

17. Antriebsvorrichtung nach einem der Ansprüche 1 bis 16, **gekennzeichnet durch** die folgenden Merkmale:
17.1 die Kopplung zwischen dem elektrischen Antriebsmotor (4) und dem Achsantrieb (7) und/oder den anzutreibenden Rädern (5, 6) erfolgt über einen Wellenstrang (14);
17.2 die Wandlergetriebebaueinheit (15) ist in Kraftflußrichtung im Fraktionsbetrieb betrachtet zwischen der Wandlergetriebebaueinheit (15) und dem Wellenstrang (14) angeordnet.

18. Verfahren zur Erhöhung des auf die Fahrzeugachsen eines nicht spurgebundenen Fahrzeuges mit einem dieselelektrisch übertragenen Drehmoment mit folgenden Schritten:
18.1 es wird ein Anfahrvorgang des Fahrzeuges erfaßt;
18.2 bei Erfassung des Anfahrvorganges wird zur Erzeugung eines überhöhten Anfahrdrehmomentes die vom Antriebsmotor erzeugte Leistung hydrodynamisch und mechanisch übertragen, wobei mit zunehmenden Drehzahlverhältnissen zwischen der Eingangswelle und der Ausgangswelle der Wandlergetriebebaueinheit der hydraulisch übertragene Leistungsanteil verringert wird;
18.3 bei Erreichen eines vorbestimmten Fahrgeschwindigkeitswertes und/oder einer den aktuellen Fahrzustand wenigstens mittelbar charakterisierenden Größe, wird die hydraulische Leistungsübertragung durch Umgehung des hydrodynamischen Drehzahl-/Drehmomentenwandlers unterbrochen.

19. Verfahren nach Anspruch 18, **dadurch gekennzeichnet, daß** die Unterbrechung der hydraulischen Leistungsübertragung durch Herstellung eines mechanischen Durchtriebes erfolgt.
